# EUROPÄISCHE PATENTANMELDUNG

(11) **EP 4 585 877 A1**
(43) Veröffentlichungstag der Anmeldung: **16.07.2025**
(21) Anmeldenummer: 24151547.7
(22) Anmeldetag: 12.01.2024
(51) Int. Cl.: F27B 17/02, A61C 13/20, F27D 7/04

(54) **DENTALOFEN**

(71) Anmelder: Ivoclar Vivadent AG, 9494 Schaan (LI)
(72) Erfinder: Beck, Gregor, 9494 Schaan (LI); Jussel, Rudolf, 6800 Gisingen (AT)
(74) Vertreter: Baldus, Oliver

(57) **Zusammenfassung**

Dentalofen (100), mit einer Bodenplatte (103) zum Anordnen eines zu erhitzenden Dentalobjekts (105); und einer Einlassöffnung (107) zum Zuführen von Luft in die Brennkammer (109) und einer Auslassöffnung (111) zum Abführen von Luft aus der Brennkammer (109), die beide in der Bodenplatte (103) oder einem Ofenkopf (115) angeordnet sind.

## Beschreibung

Die vorliegende Erfindung betrifft einen Dentalofen und ein Verfahren zum Betreiben eines Dentalofens.

Das Trocknen und Aufheizen einer dentalen Restauration in einem Dentalofen ist ein schwieriger Prozessschritt. Schichtkeramiken, Glasuren oder Malfarben werden oft pastenförmig auf die vorbereiteten dentalen Restaurationen aufgetragen und in dem Dentalofen getrocknet und gebrannt.

Wird die dentale Restauration zu schnell aufgeheizt, bevor die Paste getrocknet ist oder wird zu viel Material gleichzeitig im Dentalofen verarbeitet, kann es zu Grauverfärbungen während des Brandes kommen oder die aufgetragene Schicht kann reißen. Passiert die Trocknung hingegen zu langsam, wird Zeit verschwendet und das Brennprogramm dauert entsprechend länger.

Bisher wird die mit Paste beschmierte dentale Restauration in den warmen Dentalofen gestellt und das Programm gestartet. Das Programm beinhaltet eine definierte Schließzeit, bis der Ofenkopf vollständig geschlossen ist, wie beispielsweise von vier bis sechs Minuten. Während dieser Schließzeit trocknet die dentale Restauration durch die Restwärme des Dentalofens und die dadurch entstehende natürliche Konvektion. Alternativ kann die Trocknung der dentalen Restauration auch über eine Infrarotkamera gesteuert werden. Die Infrarotkamera misst die Temperatur der dentalen Restauration und steuert die Kopfbewegung so, dass ein definierter Aufheizgradient entsteht. Sobald die dentale Restauration trocken ist, wird der Dentalofen geschlossen.

Es ist daher die technische Aufgabe der vorliegenden Erfindung, einen Dentalofen bereitzustellen, der eine effizientere Bearbeitung einer dentalen Restauration ermöglicht.

Diese Aufgabe wird durch Gegenstände nach den unabhängigen Ansprüchen gelöst. Vorteilhafte Ausführungsformen sind Gegenstand der abhängigen Ansprüche, der Beschreibung und der Figuren.

Gemäß einem ersten Aspekt wird die technische Aufgabe gelöst durch einen Dentalofen mit einer Bodenplatte zum Anordnen eines zu erhitzenden Dentalobjekts; und einer Einlassöffnung zum Zuführen von Luft in die Brennkammer und einer Auslassöffnung zum Abführen von Luft aus der Brennkammer, die beide in der Bodenplatte oder einem Ofenkopf angeordnet sind. Die Einlassöffnung und die Auslassöffnung können vorteilhafterweise in derjenigen Komponente angeordnet sein, die gegenüber der anderen Komponente unbeweglich ist. Durch den Dentalofen wird der technische Vorteil erreicht, dass eine Konvektion um das Dentalobjekt herum erzeugt werden kann, um das Dentalobjekt schneller zu trocknen und laufend Sauerstoff in die Brennkammer zu saugen, um den Entbinderungsprozess zu beschleunigen. Die bei der Trocknung und Entbinderung entstehenden Gase und Dämpfe können aus der Brennkammer abtransportiert werden. Dadurch kann eine Herstellung des Dentalobjektes beschleunigt werden.

In einer technisch vorteilhaften Ausführungsform des Dentalofens sind die Einlassöffnung und/oder die Auslassöffnung schlitzförmig oder kreisförmig. Die Einlassöffnung und die Auslassöffnung an der Brennkammer können Bohrungen mit einem Durchmesser von 4 mm sein. Der Weg von diesen Bohrungen bis in den Brennraum durch eine Wärmedämmung verläuft durch Schlitze.

Dadurch wird beispielsweise der technische Vorteil erreicht, dass ein Luftstrom mit einer großen Breite erzeugt werden kann.

In einer weiteren technisch vorteilhaften Ausführungsform des Dentalofens weist die schlitzförmige Einlassöffnung und/oder die schlitzförmige Auslassöffnung eine Länge zwischen 35 mm und 45 mm und eine Breite zwischen 0,5 mm und 1,5 mm auf. Insbesondere kann der Schlitz eine Länge von 40 mm und eine Breite von 1 mm aufweisen. Dadurch wird beispielsweise der technische Vorteil erreicht, dass das Dentalobjekt besonders effizient gekühlt werden kann.

In einer weiteren technisch vorteilhaften Ausführungsform des Dentalofens sind die schlitzförmige Einlassöffnung und/oder die schlitzförmige Auslassöffnung radial zur Mitte der Bodenplatte angeordnet. Dadurch wird beispielsweise der technische Vorteil erreicht, dass die Luft gut an das Dentalobjekt herangeführt werden kann.

In einer weiteren technisch vorteilhaften Ausführungsform des Dentalofens liegen die schlitzförmige Einlassöffnung und die schlitzförmige Auslassöffnung in Bezug zur Mitte der Bodenplatte gegenüber. Dadurch wird beispielsweise der technische Vorteil erreicht, dass die Luft an den dentalen Objekten vorbeiströmt.

In einer weiteren technisch vorteilhaften Ausführungsform des Dentalofens sind die Einlassöffnung und/oder die

Auslassöffnung ausgebildet, einen Luftstrom um einen zentralen Bereich der Bodenplatte herumzuführen. Dadurch wird beispielsweise der technische Vorteil erreicht, dass der Luftstrom durch die Bodenplatte vorgekühlt werden kann. Die heiße Luft aus der Brennkammer wird beim Absaugen vorgekühlt, in dem sie durch die kältere Wärmedämmung strömt und dort Energie abgibt. Die Abkühlung schützt die Schläuche, Ventile, Filter und die Pumpe.

In einer weiteren technisch vorteilhaften Ausführungsform des Dentalofens umfasst der Dentalofen einen geschlossenen Ofenkopf zum Absenken auf die Bodenplatte oder eine verfahrbare Bodenplatte. Dadurch wird beispielsweise der technische Vorteil erreicht, dass eine geschlossene Brennkammer oberhalb der Brennplatte gebildet wird.

In einer weiteren technisch vorteilhaften Ausführungsform des Dentalofens umfasst der Dentalofen mehrere Einlassöffnungen und/oder mehrere Auslassöffnungen in der Brennkammer, beispielsweise in der Bodenplatte und/oder dem Ofenkopf. Dadurch wird beispielsweise der technische Vorteil erreicht, dass die Kühlung des Dentalobjektes noch weiter verbessert wird.

In einer weiteren technisch vorteilhaften Ausführungsform des Dentalofens umfasst der Dentalofen eine Vakuumpumpe zum Erzeugen eines Luftstroms durch die Einlassöffnung und/oder die Auslassöffnung. Die Vakuumpumpe kann als externes Gerät an den Dentalofen angeschlossen sein oder in den Dentalofen integriert sein. Dadurch wird beispielsweise der technische Vorteil erreicht, dass sich der Luftstrom effizient erzeugen lässt.

In einer weiteren technisch vorteilhaften Ausführungsform des Dentalofens umfasst der Dentalofen ein Filter, das stromaufwärts zu einem Einlassventil, einem Auslassventil und/oder einer Vakuumpumpe angeordnet ist. Der Filter kann insbesondere zwischen der Brennkammer und dem Auslassventil oder der Vakuumpumpe angeordnet sein. Dadurch wird beispielsweise der technische Vorteil erreicht, dass die jeweiligen Komponenten vor Verschmutzungen oder Ablagerungen geschützt sind.

Gemäß einem zweiten Aspekt wird die technische Aufgabe durch ein Verfahren zum Betreiben eines Dentalofens gelöst, mit den Schritten eines Anordnens eines zu erhitzenden Dentalobjekts auf einer Bodenplatte; und eines Abführens von Luft aus der Brennkammer über eine Auslassöffnung und eines Zuführens von Luft in die Brennkammer über eine Einlassöffnung, die beide in der Bodenplatte oder einem Ofenkopf angeordnet sind. Durch das Verfahren werden die gleichen technischen Vorteile wie durch den Dentalofen nach dem ersten Aspekt erreicht.

In einer technisch vorteilhaften Ausführungsform des Verfahrens wird die Luft bei geöffnetem oder geschlossenem Ofenkopf über die Auslassöffnung abgeführt. Dadurch wird beispielsweise der technische Vorteil erreicht, dass das Dentalobjekt auf schnelle Weise getrocknet und/oder entbindert werden kann.

In einer weiteren technisch vorteilhaften Ausführungsform des Verfahrens wird die Luft über eine Einlassöffnung zugeführt, die in der Bodenplatte angeordnet ist. Dadurch wird beispielsweise der technische Vorteil erreicht, dass eine Konvektion um das Dentalobjekt herum erzeugt wird.

In einer weiteren technisch vorteilhaften Ausführungsform des Verfahrens wird die Luft bei geschlossenem Ofenkopf zugeführt. Dadurch wird beispielsweise der technische Vorteil erreicht, dass sich die Konvektion noch weiter verbessert.

In einer weiteren technisch vorteilhaften Ausführungsform des Verfahrens wird die Luft mittels einer Vakuumpumpe abgeführt. Dadurch wird beispielsweise der technische Vorteil erreicht, dass sich die Luft effizient erzeugen lässt.

In einer weiteren technisch vorteilhaften Ausführungsform des Verfahrens wird die Luft stromaufwärts zu einem Einlassventil, einem Auslassventil und/oder einer Vakuumpumpe durch ein Filter gefiltert. Das Filter kann insbesondere zwischen der Brennkammer und dem Auslassventil angeordnet sein. Dadurch wird beispielsweise der technische Vorteil erreicht, dass die jeweiligen Komponenten vor Verschmutzungen oder Ablagerungen geschützt sind.

Ausführungsbeispiele der Erfindung sind in den Zeichnungen dargestellt und werden im Folgenden näher beschrieben.

Es zeigen:
- Fig. 1: eine schematische Ansicht eines Dentalofens mit geöffnetem Ofenkopf;
- Fig. 2: eine schematische Ansicht eines Dentalofens mit geschlossenem Ofenkopf;
- Fig. 3: eine Aufsicht auf eine Bodenplatte zum Anordnen eines zu erhitzenden Dentalobjekts;
- Fig. 4: einen Verlauf eines Brennprogramms; und

- Fig. 5: ein Blockdiagramm eines Verfahrens zum Betreiben eines Dentalofens.

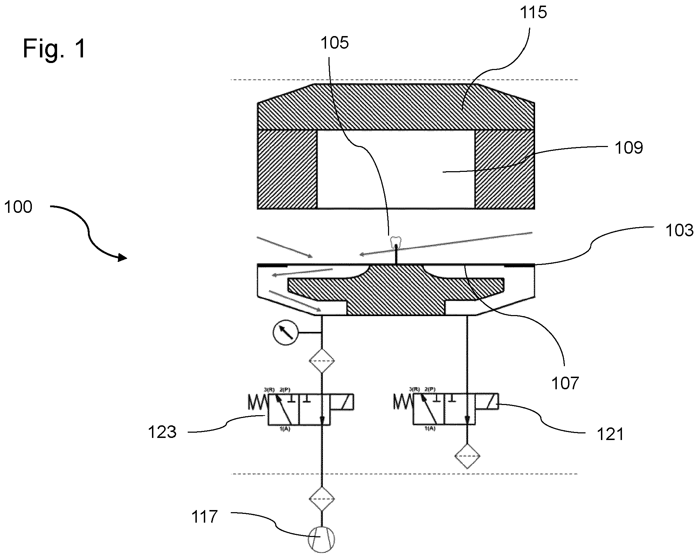

Fig. 1 zeigt eine schematische Ansicht eines Dentalofens 100 mit geöffnetem Ofenkopf 115. Der Dentalofen 100 dient zum Erhitzen und Tempern eines Dentalobjektes 105, wie beispielsweise einer dentalen Restauration. Der Dentalofen 100 umfasst einen Ofenkopf 115, der auf eine Bodenplatte 103 absenkbar ist. Durch den abgesenkten Ofenkopf 115 und die Bodenplatte 103 wird eine geschlossene Brennkammer 109 gebildet. In der Brennkammer 109 befindet sich das zu erwärmende Dentalobjekt 105.

Die Bodenplatte 103 umfasst eine Einlassöffnung 107 zum Zuführen von Luft und eine Auslassöffnung 111 zum Abführen von Luft. Mithilfe einer Frischluftfunktion kann bei offenem Ofenkopf 115 eine erzwungene Konvektion von Luft um das Dentalobjekt 105 herum erzeugt werden, um das Dentalobjekt 105 schneller zu trocknen, beispielsweise in drei statt sechs Minuten.

Die erzwungene Konvektion entsteht dadurch, dass ein Luftstrom durch die Auslassöffnung 111 bei geöffneten Ventilen 123 hindurch erzeugt wird. Dieser Luftstrom wird dadurch erzeugt, dass eine Vakuumpumpe 117 eingeschaltet und Luft durch die Auslassöffnung in der Bodenplatte 103 angesaugt wird. Ein aktiver Luftstrom durch die gegenüberliegende Einlassöffnung 107 findet dabei nicht statt. Durch diesen Luftstrom kann das Dentalobjekt 105 auch bei geöffnetem Ofenkopf 115 gekühlt werden.

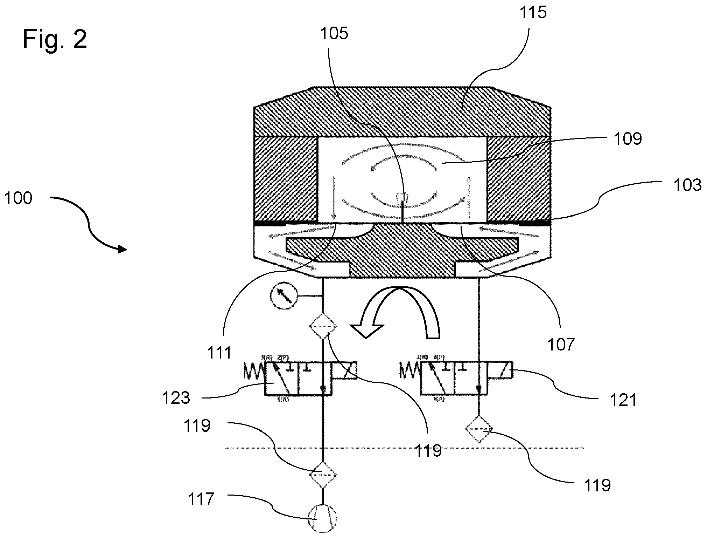

Fig. 2 zeigt eine schematische Ansicht eines Dentalofens 100 mit geschlossenem Ofenkopf 115. Die Frischluftfunktion kann bei geschlossenem Ofenkopf 115 Frischluft durch die Brennkammer 109 saugen, beispielsweise mit einem Fluss von 10 l/min. Durch das Schließen des Ofenkopfes 115 strömt die Luft durch die Auslassöffnung 111 und wird aus der Brennkammer 109 gesaugt. Frische Luft tritt über die Einlassöffnung 107 in die Brennkammer ein.

Die bei der Trocknung des Dentalobjekts 105 entstehenden Gase und Dämpfe werden abgesaugt, damit die Geruchsentwicklung um den Dentalofen 100 herum verringert wird und die dentale Restauration beim Brennen nicht unerwünscht verfärbt oder beschädigt wird. Je nach Ofentemperatur (ca. <250°C) kann das Dentalobjekt 105 vollständig im geschlossenen Dentalofen 100 getrocknet werden, beispielsweise wenn die Frischluft-Funktion aktiviert ist.

Zusätzlich zu diesem Effekt wird, wie bei offenem Ofenkopf 115, eine erzwungene Konvektion um das Dentalobjekt 105 erzeugt. Mit natürlicher Konvektion dauert die Trocknung länger als mit erzwungener Konvektion (Frischluftfunktion).

Die abgesaugten Gase und Dämpfe werden vor einem Ventil 123 durch ein Filter 119, eine Kältefalle, eine Gaswaschflasche, ein Granulat, einen Absorptionsfilter, einen Kohlefilter oder Ähnliches gefiltert, um das Ventil 123 zu schützen. Der Durchfluss findet hierbei nur in einer Richtung statt, sodass kein Rückschlagventil erforderlich ist. Die Ventile 121 und 123 werden verwendet, um ein Vakuum in der Brennkammer zu erzeugen und aufrechtzuerhalten. Dabei wird zunächst das Ventil 121 geschlossen, während die Vakuumpumpe die Luft aus der Brennkammer 109 saugt. Sobald ein ausreichender Unterdruck in der Brennkammer 109 erreicht ist, wird auch das Ventil 123 geschlossen, so dass die Brennkammer 109 abgedichtet ist.

Bei der Trocknung von Pasten auf dem Dentalobjekt 105 können unangenehme Gerüche entstehen. Wenn das Dentalobjekt 105 im geschlossenen Dentalofen 100 getrocknet wird, können diese Gerüche effizient über die Vakuumpumpe 117 abtransportiert werden.

Hierbei wird kein T- oder Y-Stück und kein Bypass verwendet. Die Luft, die von der Vakuumpumpe 117 abgesaugt wird, strömt vollständig durch die Brennkammer 109. Die Anschlüsse sind nicht gegenüberliegend, sondern auf der gleichen Seite angeordnet, d.h. beide in der Bodenplatte 103 oder beide in dem Ofenkopf 115. Die heiße Luft aus der Brennkammer 109 strömt durch Schlitze oder ein Labyrinth in der Wärmedämmung nach außen und wird hier vorgekühlt.

Die eingesaugte Luft durch die Einlassöffnung 107 wird ebenfalls durch die Wärmedämmung angesaugt und vorgewärmt. Der Ofenkopf 115 kann in diesem Fall schneller geschlossen werden, da die Trocknung des Dentalobjektes 105 schneller stattfindet. Die Programmlaufzeit verkürzt sich somit.

Je nach Ofentemperatur (ca. <250°C) kann der Ofenkopf 115 sofort bei Programmstart geschlossen werden. Somit werden die unangenehmen Gerüche beim Trocknen der Restauration über die Vakuumpumpe abgesaugt. Zudem kann mehr Material gleichzeitig ohne Qualitätseinbußen durch den Dentalofen 100 verarbeitet werden. Das Risiko von Grauverfärbungen und Rissen in dem Dentalobjekt 105 wird verringert.

Der Abkühlgradient bei geschlossenem Ofenkopf 115 am Programmende kann beschleunigt werden, indem Frischluft durch die Brennkammer 109 gesaugt wird. Dadurch kann das Dentalobjekt 105 nach dem Brennen schnell bis kurz vor die Glasübergangstemperatur abgekühlt werden. Der Glasübergang wird dann langsam durchlaufen und anschließend das Dentalobjekt 105 wieder schnell abgekühlt. Dies verringert die Programmlaufzeit.

Die Bereitschaftstemperatur des Dentalofens 100 kann verringert werden, beispielsweise von 400°C auf 200°C, da die Trocknung der dentalen Restauration 105 mit Frischluft unterstützt wird. Das hat den Vorteil, dass der Dentalofen 100 weniger Energie verbraucht.

Mit Hilfe des gemessenen Druckabfalls (ca. 0.1 bar) in der Brennkammer 109 bei aktivierter Frischluftfunktion kann indirekt auch der Durchfluss (ca. 10 l/min) durch die Brennkammer 109 gemessen werden. Mit Hilfe des gemessenen Druckabfalls in der Brennkammer 109 bei aktivierter Frischluftfunktion kann die Leistungsfähigkeit der Vakuumpumpe 117 beurteilt werden.

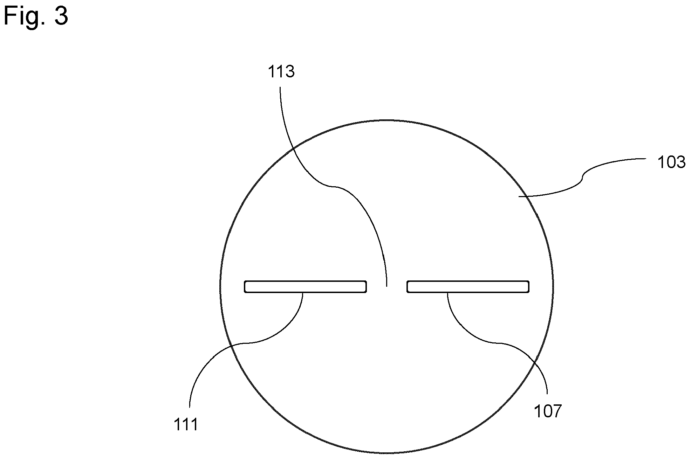

Fig. 3 zeigt eine Aufsicht auf die Bodenplatte 103 zum Anordnen des zu erhitzenden Dentalobjekts 105. Die Bodenplatte 103 umfasst die schlitzförmige Einlassöffnung 107 und die schlitzförmige Auslassöffnung 111. Die schlitzförmige Einlassöffnung 107 und die schlitzförmige Auslassöffnung 111 sind radial zur Mitte 113 der Bodenplatte 103 angeordnet. Die schlitzförmige Einlassöffnung 107 und die schlitzförmige Auslassöffnung 111 liegen sich in Bezug zur Mitte 113 der Bodenplatte 103 gegenüber.

Es können auch mehrere schlitzförmige Einlassöffnungen 107 und Auslassöffnungen 111 vorgesehen sein, die radial zur Mitte 113 der Bodenplatte 103 angeordnet sind und die jeweils um die Mitte 113 herum verteilt sind. Im Allgemeinen können die Einlassöffnungen 107 und Auslassöffnungen 111 auch andere Geometrien aufweisen.

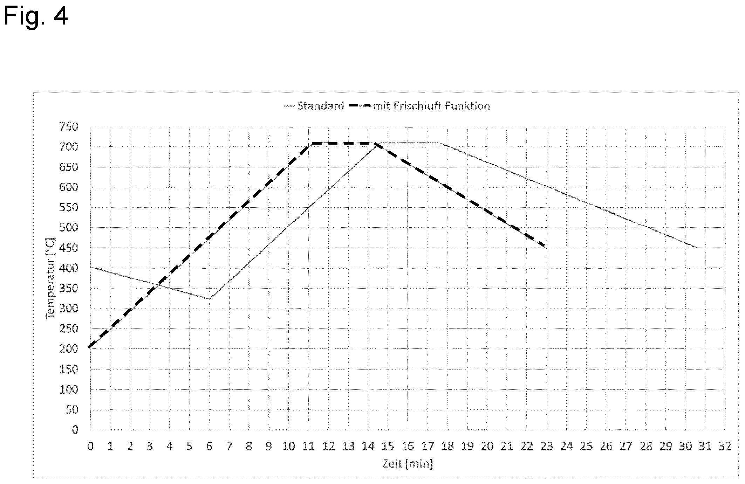

Fig. 4 zeigt einen beispielhaften Verlauf eines Brennprogramms. Bei einem typischen Brennprogramm (durchgezogene Linie) wird das Programm gestartet. Der Ofenkopf 115 ist geöffnet und das Dentalobjekt 105 wird mit der Restwärme des Dentalofens 100 während 6 Minuten getrocknet. Der Dentalofen 100 wird standardmäßig auf 400°C Bereitschaftstemperatur vorgeheizt. Während dieser 6 Minuten schließt sich der Ofenkopf 115 langsam. Die Feuchtigkeit und die organischen Binderanteile des Dentalobjektes 100 können während dieser 6 Minuten an die Umgebungsluft entweichen.

Der Dentalofen 100 kühlt während dieser Zeit ab. Danach ist der Ofenkopf 115 geschlossen und die Aufheizphase startet, in der bis zur Haltetemperatur von 710°C geheizt wird. Dabei, d.h. zwischen 450 und 709°C, wird in der Brennkammer 109 ein Vakuum erzeugt. Bei der Haltetemperatur von 710°C wird die Glasur in einem Zeitraum von 3 Minuten gebrannt. Nach der Haltephase bei der Haltetemperatur wird die Heizung des Dentalofens 100 ausgeschaltet. Das Dentalobjekt 105 kühlt zusammen mit dem geschlossenen Dentalofen 100 langsam ab. Bei unkritischen Bränden kann der Ofenkopf 115 bereits zu diesem Zeitpunkt geöffnet werden. Die Abkühlung ist abhängig von den Wärmeverlusten des Dentalofens 100. Sobald der Dentalofen 100 auf 450°C abgekühlt ist, wird der Ofenkopf 115 geöffnet und das Programm ist beendet. Dieses Programm dauert ca. 30 Minuten.

Bei einem vergleichbaren Brennprogramm mit Frischluftfunktion (gestrichelte Linie) wird das Programm ebenfalls gestartet. Die Bereitschaftstemperatur des Dentalofens 100 ist verringert, beispielsweise auf 200°C. Dies ermöglicht, dass der Ofenkopf 115 bei Programmstart sofort geschlossen werden kann, ohne dass sich das Dentalobjekt zu schnell aufheizt. Durch ein zu schnelles Aufheizen kann das Dentalobjekt 105 zerstört oder die Qualität des Brandes beeinträchtigt werden. Die Aufheizphase auf die Haltetemperatur von 710°C kann sofort starten.

Das Dentalobjekt 105 wird während der Aufheizphase durch die steigende Temperatur und die Frischluftfunktion getrocknet und entbindert. Es wird ständig frische Luft durch die Brennkammer 109 gesaugt. Die bei der Trocknung und Entbinderung entstehenden Gase und Dämpfe werden durch die Vakuumpumpe 117 abtransportiert. Ab 450°C und bis 709°C wird ein Vakuum in der Brennkammer 109 erzeugt und keine frische Luft mehr durch die Brennkammer 109 gesaugt.

Nach der Haltephase bei 710°C wird das Dentalobjekt 105 im geschlossenen Dentalofen 100 abgekühlt. Dadurch, dass die Bereitschaftstemperatur des Dentalofens 100 von 400°C auf 200°C reduziert wurde, ist weniger Energie in der Wärmedämmung gespeichert. Dadurch findet die Abkühlung schneller statt als beim Standardprogramm. Zudem wird während dieser Abkühlung die Frischluftfunktion erneut eingeschaltet. Die frische und kalte Luft, die durch die Brennkammer 109 strömt, erwärmt sich und hilft dabei, thermische Energie aus der Brennkammer 109 abzutransportieren, um die Abkühlung des Dentalofens 100 und des Dentalobjekts 105 weiter zu beschleunigen. Das Programm dauert lediglich ca. 23 Minuten.

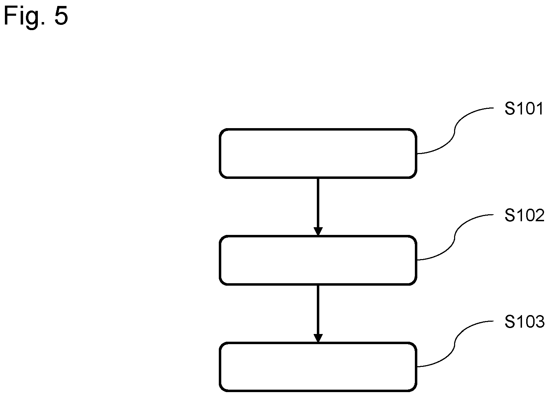

Fig. 5 zeigt ein Blockdiagramm eines Verfahrens zum Betreiben eines Dentalofens 100. Im Schritt S101 wird das zu erhitzende Dentalobjekt 105 auf der Bodenplatte 103 angeordnet. In Schritt S102 wird Luft in die Brennkammer 109 über die Einlassöffnung 107 zugeführt, die in der Bodenplatte 103 oder dem Ofenkopf 115 angeordnet ist. Die Luft kann durch die Einlassöffnung 107 einströmen, wenn der Ofenkopf 115 geschlossen ist und die Vakuumpumpe 117 aktiviert worden ist. In Schritt S103 wird die Luft aus der Brennkammer 109 über eine Auslassöffnung 111 abgeführt, die in der gleichen Komponente wie die Einlassöffnung 107 angeordnet ist. Die Schritt S102 und S103 können gleichzeitig durchgeführt werden.

Die Luft kann bei geöffnetem oder geschlossenem Ofenkopf 115 durch die Auslassöffnung 111 abgeführt werden. Dadurch lässt sich eine Konvektion um das Dentalobjekt erzeugen, das in der Mitte 113 der Brennkammer 109 angeordnet ist.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Einrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHEN

- 100: Dentalofen
- 103: Bodenplatte
- 105: Dentalobjekt
- 107: Einlassöffnung
- 109: Brennkammer
- 111: Auslassöffnung
- 113: Mitte
- 115: Ofenkopf
- 117: Vakuumpumpe
- 119: Filter
- 121: Einlassventil
- 123: Auslassventil

## Patentansprüche

1. Dentalofen (100), mit:
- einer Bodenplatte (103) zum Anordnen eines zu erhitzenden Dentalobjekts (105);
- einer Einlassöffnung (107) zum Zuführen von Luft in die Brennkammer (109) und einer Auslassöffnung (111) zum Abführen von Luft aus der Brennkammer (109), die beide in der Bodenplatte (103) oder einem Ofenkopf (115) angeordnet sind.

2. Dentalofen (100) nach Anspruch 1, wobei die Einlassöffnung (107) und/oder die Auslassöffnung (111) schlitzförmig sind.

3. Dentalofen (100) nach Anspruch 2, wobei die schlitzförmige Einlassöffnung (107) und/oder die schlitzförmige Auslassöffnung (111) eine Länge zwischen 35 mm und 45 und eine Breite zwischen 0,5 mm und 2 mm aufweist.

4. Dentalofen (100) nach Anspruch 2 oder 3, wobei die schlitzförmige Einlassöffnung (107) und/oder die schlitzförmige Auslassöffnung (111) radial zur Mitte (113) der Bodenplatte (103) angeordnet sind.

5. Dentalofen (100) nach Anspruch 4, wobei die schlitzförmige Einlassöffnung (107) und die schlitzförmige Auslassöffnung (111) in Bezug zur Mitte (113) der Bodenplatte (103) gegenüberliegen.

6. Dentalofen (100) nach einem der vorangehenden Ansprüche, wobei die Einlassöffnung (107) und/oder die Auslassöffnung (111) ausgebildet sind, einen Luftstrom um einen zentralen Bereich der Bodenplatte (103) herumzuführen.

7. Dentalofen (100) nach einem der vorangehenden Ansprüche, wobei der Dentalofen (100) einen geschlossenen Ofenkopf (115) zum Absenken auf die Bodenplatte (103) oder eine verfahrbare Bodenplatte (103) umfasst.

8. Dentalofen (100) nach einem der vorangehenden Ansprüche, wobei der Dentalofen (100) mehrere Einlassöffnungen (107) und/oder mehrere Auslassöffnungen (111) in der Bodenplatte (103) umfasst.

9. Dentalofen (100) nach einem der vorangehenden Ansprüche, wobei der Dentalofen (100) eine Vakuumpumpe (117) zum Erzeugen eines Luftstroms durch die Einlassöffnung (107) und/oder die Auslassöffnung (111) umfasst.

10. Dentalofen (100) nach einem der vorangehenden Ansprüche, wobei der Dentalofen (100) ein Filter (119) umfasst, das stromaufwärts zu einem Einlassventil (121), einem Auslassventil (123) und/oder einer Vakuumpumpe (117) angeordnet ist.

11. Verfahren zum Betreiben eines Dentalofens (100), mit den Schritten:
- Anordnen (S101) eines zu erhitzenden Dentalobjekts (105) auf einer Bodenplatte (103); und
- Abführen (S103) von Luft aus der Brennkammer (109) über eine Auslassöffnung (111) und Zuführen (S102) von Luft in die Brennkammer (109) über eine Einlassöffnung (107), die beide in der Bodenplatte (103) oder einem Ofenkopf (115) angeordnet sind.

12. Verfahren nach Anspruch 11, wobei die Luft bei geöffnetem oder geschlossenem Ofenkopf (115) über die Auslassöffnung (111) abgeführt wird.

13. Verfahren nach Anspruch 11, wobei die Luft mittels einer Vakuumpumpe (117) abgeführt wird.

14. Verfahren nach Anspruch 13, wobei die Luft bei geschlossenem Ofenkopf (115) zugeführt wird.

15. Verfahren nach einem der Ansprüche 11 bis 14, wobei die Luft stromaufwärts zu einem Einlassventil (121), einem Auslassventil (123) und/oder einer Vakuumpumpe (117) durch ein Filter (119) gefiltert wird.
